# EUROPEAN PATENT SPECIFICATION

(11) **EP 1 338 372 B1**
(45) Date of publication and mention of the grant of the patent: **04.05.2005**
(21) Application number: 02425090.4
(22) Date of filing: 20.02.2002
(51) Int. Cl.: B23P 19/00

(54) **Basic machine for automatic assembly of articles**
Grundmaschine zur automatischen Montage von Teilen
Machine de base pour l' assemblage automatique des éléments

(43) Date of publication of application: 27.08.2003
(73) Proprietor: Vossloh-Schwabe Italia SPA, 47027 Sarsina (Forli') (IT)
(72) Inventor: Baronio Pierpaolo, 47027 Sarsina (forli') (IT); Bazzocchi Giuseppe, 47023 Cesena (Forli') (IT)
(74) Representative: Petruzziello, Aldo

(56) References cited:
- DE-A- 3 507 224
- DE-A- 4 111 547
- DE-A- 4 230 785
- DE-A- 19 842 999
- DE-A- 19 953 281
- US-A- 3 290 766
- PATENT ABSTRACTS OF JAPAN vol. 001, no. 060 (M-021), 10 June 1977 (1977-06-10) -& JP 52 009184 A (MATSUDA HIRONOBU), 24 January 1977 (1977-01-24)
- PATENT ABSTRACTS OF JAPAN vol. 012, no. 386 (M-754), 14 October 1988 (1988-10-14) -& JP 63 139625 A (TOYAMA TECHNICAL ENJINIASHIYA:KK), 11 June 1988 (1988-06-11)
- PATENT ABSTRACTS OF JAPAN vol. 1995, no. 10, 30 November 1995 (1995-11-30) -& JP 07 183693 A (TOSHIBA CORP), 21 July 1995 (1995-07-21)
- PATENT ABSTRACTS OF JAPAN vol. 2000, no. 09, 13 October 2000 (2000-10-13) -& JP 2000 153417 A (MURANAKA AKINORI), 6 June 2000 (2000-06-06)

## Description

The present invention refers to a basic machine for automatic assembly of articles or products, in particular small-sized articles such as lamp holders and the like according to the preample of claim 1. Such a machine is known from DE-A-41 11 547.

In the field of automation, what is meant by a basic machine is a standard handling system intended to be set up for specific products requiring assembly. Such a handling system is able to impart to suitable picking members, such as grippers, for example, movements aimed at positioning basic components on appropriate workpiece holders.

The components are fed toward the basic machine by means of suitable terminals and feeds. Nevertheless, the workpiece holders, the picking members, the terminals and the feeds do not form part of the basic machine, in that they are defined and positioned during setting up.

The aim of the basic machine is to provide a complete machine cycle consisting of translation of the workpiece holder and a picking and placing cycle performed by the picking members.

The picking and placing cycle typically consists of the following steps:
- stopping of the picking members in the picking position for picking of the component from a terminal situated on the fixed machine table, by means of the picking member;
- vertical upward movement of the picking member for raising of the component;
- horizontal stroke of the picking member for translation of the component toward the workpiece holder;
- vertical downward stroke of the picking member for lowering of the component into the position for placing on the workpiece holder;
- stopping of the picking members in the placing position for placing of the component on the workpiece holders;
- vertical upward stroke of the empty picking member that has released the component;
- horizontal stroke of the empty picking member to move away from the workpiece holder and return to the picking position;
- vertical downward stroke of the picking member to position itself in the picking position for a new component.

However, for particular applications different cycles from the one described above can be foreseen.

Such a machine cycle is obtained by the combination of three main movements: vertical movement of the picking members, horizontal movement of the picking members and movement of rotation or translation of the workpiece holder. Each movement is defined by respective functional parameters.

The vertical movement of the picking members is defined by the following functional parameters:
- starting height of the picking member with respect to the machine table;
- final height of the picking member with respect to the machine table;
- speed of the picking member;
- acceleration of the picking member.
The horizontal movement of the picking members is defined by the following functional parameters:
- starting position of the picking member with respect to the workpiece holder;
- final position of the picking member with respect to the workpiece holder;
- speed of the picking member;
- acceleration of the picking member.

The movement of translation or rotation of the workpiece holder is defined by the following functional parameters:
- starting position of the workpiece holder;
- final position of the workpiece holder;
- speed of the workpiece holder;
- acceleration of the workpiece holder.

The basic machines currently produced can be classified according to some particular criteria:
A) Implementation of movements:
   - Asynchronous basic machines in which the picking and placing movement is obtained by combining the movement of the single axes or arms (pneumatic or mechanical axes with a fixed stroke).
   - Synchronous basic machines in which the picking and placing movement is synchronous with respect to the movement of the workpiece holder and is obtained by means of a single centralized motor that controls particular mechanisms (cams, Maltese crosses, articulated systems and the like).
B) Position of the picking and placing arms:
   - Basic machines with picking and placing arms on the outside with respect to the workpiece holder
   - Basic machines with picking and placing arms on the inside with respect to the workpiece holder
C) Movement of the workpiece holder
   - Basic machines with a revolving table.
   - In-line basic machines.

In conventional basic machines the machine cycle is obtained by means of a single motor, through articulated systems or other mechanisms. The functional parameters of the machine cycle are defined by the mechanical structure of the machine and set when the machine is built. In particular, said functional parameters must be defined at the time the machine is designed and cannot be freely modified during setting up of the machine.

In more advanced basic machines there exists the possibility of synchronizing the movement of translation of the workpiece holder with the picking and placing movement that is obtained by a second motor, by means of a complex system of mechanisms.

However, the basic machines according to the prior art lack versatility, since they do not allow the functional parameters to be modified and they are also excessively complex because of the presence of mechanical members used for synchronization of movements.

JP 52-9184 discloses an automatic assembling machine comprising separate actuators for imparting to picking elements, horizontal and vertical movements, respectively.

US 3.290.766 discloses means to impart and control the movements of picking elements of an assembly machine.

DE 199 53 281 discloses the use of servomotors in an assembly machine.

The object of the present invention is to eliminate the drawbacks of the prior art, providing a basic machine for automatic assembly of articles that is extremely versatile and allows the functional parameters to be changed during setting up or according to the type of article that is to be assembled.

Another object of the present invention is to provide such a basic machine for automatic assembly of articles that is extremely reliable and at the same time simple to make.

These objects are achieved according to the invention with the characteristics listed in appended independent claim 1.

Advantageous embodiments of the invention are apparent from the dependent claims.

The basic machine for automatic assembly of articles according to the invention comprises a fixed machine table disposed on the fixed frame of the machine to which the units for feeding the single components destined for assembly of the articles are fixed. Disposed above the machine table is a revolving table or linear transfer that moves with an indexed movement and it is designed to support a plurality of workpiece holders in which the components for assembly of the article are positioned. The machine provides a plurality of slides able to support gripping or picking members for picking up and releasing the single components. The picking members are vertically and horizontally moveable to pass from a picking position in which they pick the components from the feed terminals disposed on the machine table and a placing position in which they place the picked components on the respective workpiece holder of the revolving table.

The basic machine according to the invention comprises at least two independent servomotors to control the vertical translating movement of the gripping members and the horizontal translating movement of the gripping members, respectively.

Furthermore the horizontal translating movement of the picking elements is obtained by means of a crank plate, which, through a plurality of kinetic mechanisms, transmits the horizontal movement to said slides, wherein said crank plate is driven directly by a servomotor such as a torque motor, without any interposition of a reduction unit.

In this manner, the user, by acting directly on the drives of the servomotors, can vary the functional parameters of the picking up and placing cycle as he wishes. Thus, the peculiar feature of the invention is to have made the horizontal movement of the picking members independent from the vertical movement, replacing the mechanical systems to synchronize the movements used in the prior art with electronic synchronism systems obtained thanks to the servomotors coordinated by electronic controls.

As a result the following advantages are obtained:
- Raising and the horizontal stroke of the picking members can be continuously adjusted independently during setting up of the machine, in a manner that can be adapted to the height and width of the components.
- The picking and placing cycle can be set freely with the possibility of setting particular picking and placing cycles.
- The entire machine cycle can be readjusted in the event of changes in product without any intervention on the mechanics of the machine.
- The acceleration and speed ramps for the three main movements of the machine are adjustable.

Further characteristics of the invention will be made clearer by the detailed description that follows, referring to examples and to a purely exemplary and therefore non-limiting embodiment, illustrated in the appended drawings, in which:
Figure 1 is a plan view from above of an example of a basic machine for automatic assembly of articles or products, which does not form part of the claimed invention but it is useful for understanding it in which the feed systems and the relative terminals are shown hatched,
Figure 2 is an axial sectional view along the sectional plane II-II of Figure 1, in which some elements of the machine have not been sectioned;
Figure 3 is a block diagram illustrating an example of an electronic control system of the machine;
Figure 4 is an axial sectional view, like Figure 2, illustrating a second;
Figure 5 is a plan view from above of a basic machine according to a third the invention;
Figure 6 is a front view of the machine of Figure 5, in which a part is shown in axial section;
Figure 7 is a plan view from above of a fourth example of a basic machine for automatic assembly of articles or products, which does not form part of the claimed invention but it is useful for understanding it, in which a linear transfer is used in place of the rotating plate;
Figure 8 is an axial sectional view taken along the plane of section VII-VII of Figure 7, in which some elements have not been sectioned.

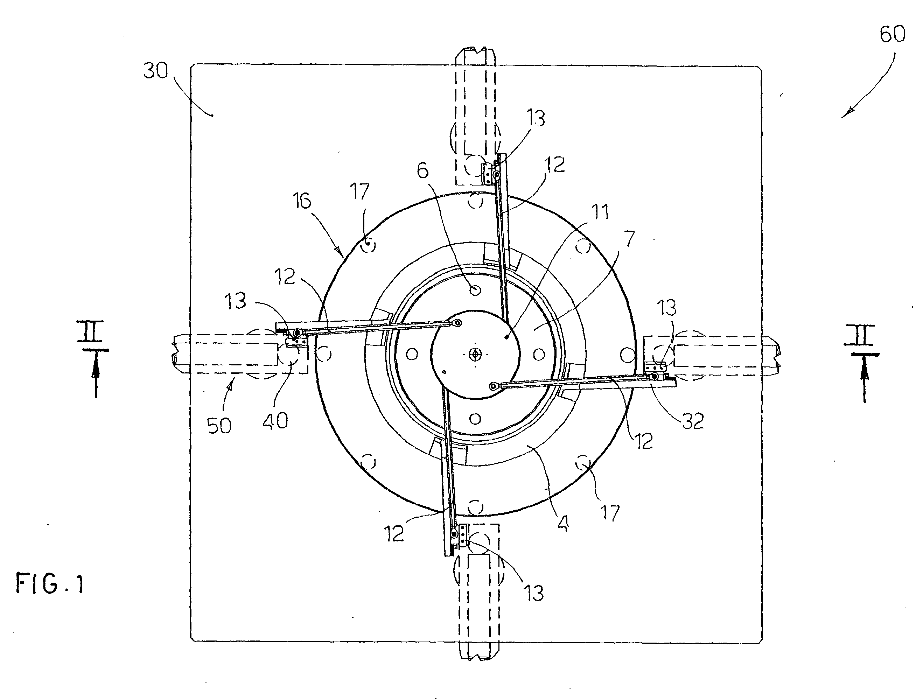

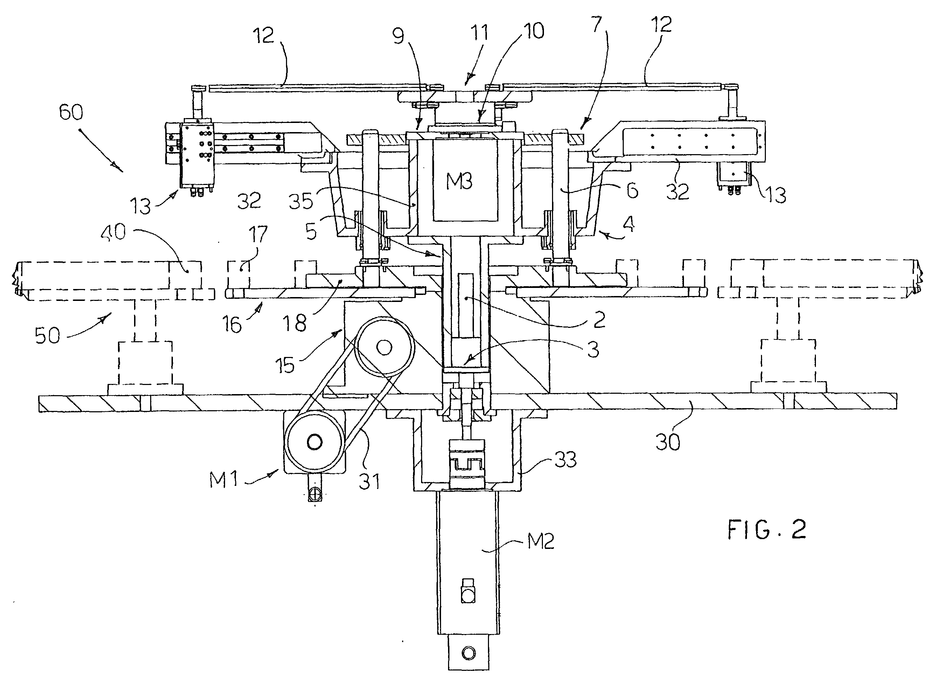

With the aid for now of Figures 1 and 2 an example of a basic machine for automatic assembly of articles or products, which does not form part of the claimed invention but it is useful for understanding it, denoted as a whole by reference numeral 60, will now be described.

The basic machine 60 comprises a horizontal machine table 30 mounted in a fixed manner on the frame of the machine. The machine table 30 is designed to support feed systems 50 which have terminals 40 able to feed to the basic machine the basic components which must be assembled for production of the article or item.

A revolving table 15 is mounted in a central position on the machine table 30. The revolving table 15 is set in rotation by means of a servomotor M1 mounted integrally to the machine table 30. The servomotor M1 transmits movement to the revolving table 15, by means of a belt 31. However, other systems for driving the revolving table 15 can be provided.

A circular revolving plate 16 is mounted integrally on the revolving table 15. The revolving plate 16 can be driven directly by a motor, such as, for example, a torque motor, without any interposition of other devices or gears.

The revolving plate 16 is designed for fixing, peripherally, of a plurality of workpiece holders 17 in the form of cylindrical tangs protruding vertically upward. The workpiece holders 17 are designed to receive the various basic components assembled to form an article or item. By way of example, Figure 1 shows eight workpiece holders 17 equally spaced from each other by an angle of 45°.

A fixed base plate 18 mounted integrally on the fixed frame of the machine or of the revolving table is disposed above the revolving plate 16. Mounted on the fixed plate 18 are guide columns 6 which protrude vertically upward therefrom. At their upper end, the guide columns 6 can be fixed to a holding plate 7. In this manner the assembly formed by the base plate 18, the guide columns 6 and the holding plate 7 forms a rigid, fixed frame.

A translating plate 4 is mounted vertically slidable on the vertical guide columns 6. The translating plate 4 is supported underneath by a sleeve 5 which passes axially through the fixed plate 18, the revolving plate 16 and the revolving table 15.

A lead nut or nut screw 3 is mounted integrally on the bottom part of the sleeve 5, within the revolving table 15. A screw 2, such as, for example, a ball bearing screw, the shank of which is disposed axially inside the sleeve 5, engages in the lead nut 3.

The ball bearing screw 2 is driven in rotation around its axis by a servomotor M2 mounted on a bracket 33 disposed centrally in the bottom surface of the machine table 30. In this manner a rotation of the screw 2 in one direction or the other causes a vertical translation of the lead nut 3 integral with the sleeve 5 and the translating plate 4. As a result, the translating plate 4 moves with a reciprocal vertical movement guided on the guide columns 6. Vice versa, a lead nut driven by the servomotor M2 and a screw translating vertically and integral with the translating plate 4 could be provided or, alternatively, the servomotor M2 has the system consisting of the screw 2 and the lead nut 3 integrated.

Guide rails 32 protrude horizontally outward from the translating plate 4. By way of example, as shown in Figure 1, the translating plate 4 comprises four guide rails 32 disposed angularly equidistant from each other by an angle of about 90°.

Sliding on the horizontal guide rails 32 are respective slides or carriages 13 on which are fixed picking members, such as grippers (not shown in the figures), able to pick up the single elements which go to make up the item to be assembled.

The translating plate 4 has a central cup-shaped part 35 that can pass axially through the holding plate 7. Disposed above the central cup-shaped part 35 of the translating plate 4 is a supporting plate 9 that supports at the bottom a servomotor M3 disposed within the central cup-shaped part 35. The servomotor M3 is provided with a reduction unit or geared motor 10 disposed above the supporting plate 9.

The reduction unit 10 supports and sets in rotation a substantially circular crank plate 11 which is maintained above the translating plate 4. The ends of connecting rods 12 are pivoted in the periphery of the crank plate 11. The other ends of the connecting rods 12 are pivoted in the respective slides 13. In the example in Figure 1, four connecting rods 12 disposed horizontally with their axis parallel to the respective guide rails 32 are shown.

In this manner the crank plate 11 acts as a crank for the connecting rods 12, thus an alternating rotation of the crank plate 11 causes, by means of the connecting rods 12, an oscillating horizontal translation of the slides 13 on the horizontal rails 32.

Operation of the machine 60 is described below.

The vertical translating movement of translating plate 4 along the vertical guide columns 6 is controlled by the servomotor M2 which sets in rotation the screw 2 which engages into the lead nut 3 raising or lowering the sleeve 5 integral to the trslating plate 4.

The horizontal translating movement of the slides 13 along the horizontal rails 32 is controlled by the servomotor M3 which, by means of the geared motor 10, sets in rotation the crank plate 11 which drives the connecting rods 12 pivoted in the respective slides 13.

The rotating movement of the revolving plate 16 to move the workpiece holder 17 at each picking cycle can be obtained by means of the revolving table 15 controlled by the servomotor M1, through the belt 31.

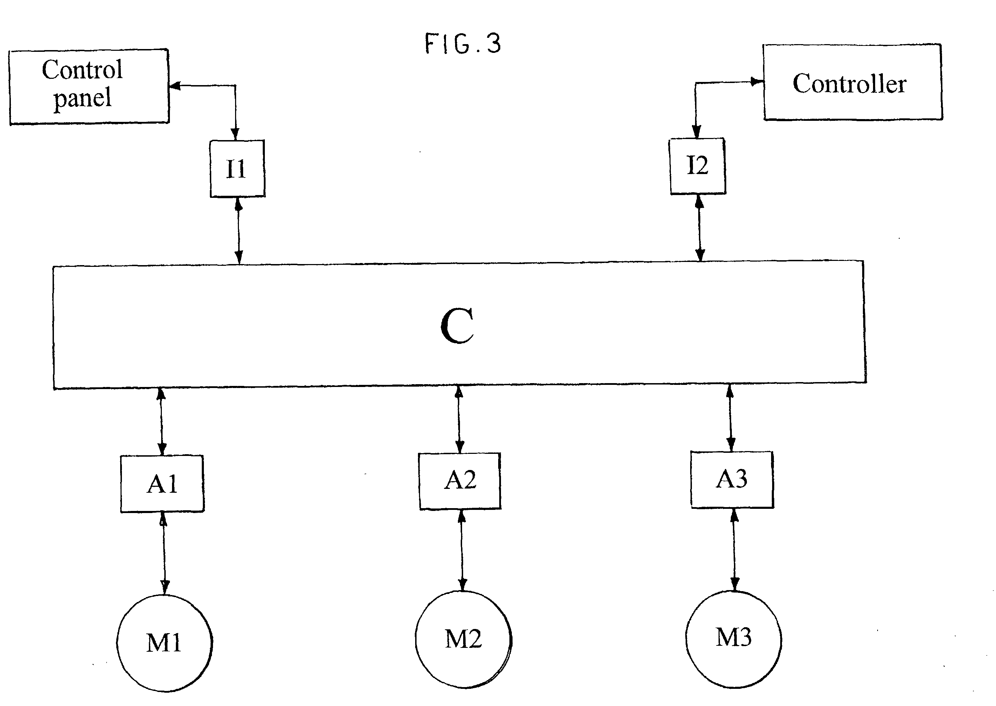

As shown in the concept diagram of Figure 3, the single servomotors M1, M2 and M3 are connected through respective drives A1, A2 and A3 to an axis control board C. The axis control board C coordinates the drives A1, A2 ad A3 to synchronize the motors M1, M2 and M3 according to the machine cycles to be performed.

The axis control board C comprises an operator interface I1 connected to a control panel to allow the operator to vary the operating parameters of the machine during setting up of the machine.

The axis control board C further comprises a second interface 12 connected to a machine controller, such as for example a PLC (Programmable Logic Controller) or a PC.

In the description of the following examples and of the embodiment of the invention, like or corresponding elements to those already described in the first example will be indicated with the same reference numerals and not described in detail.

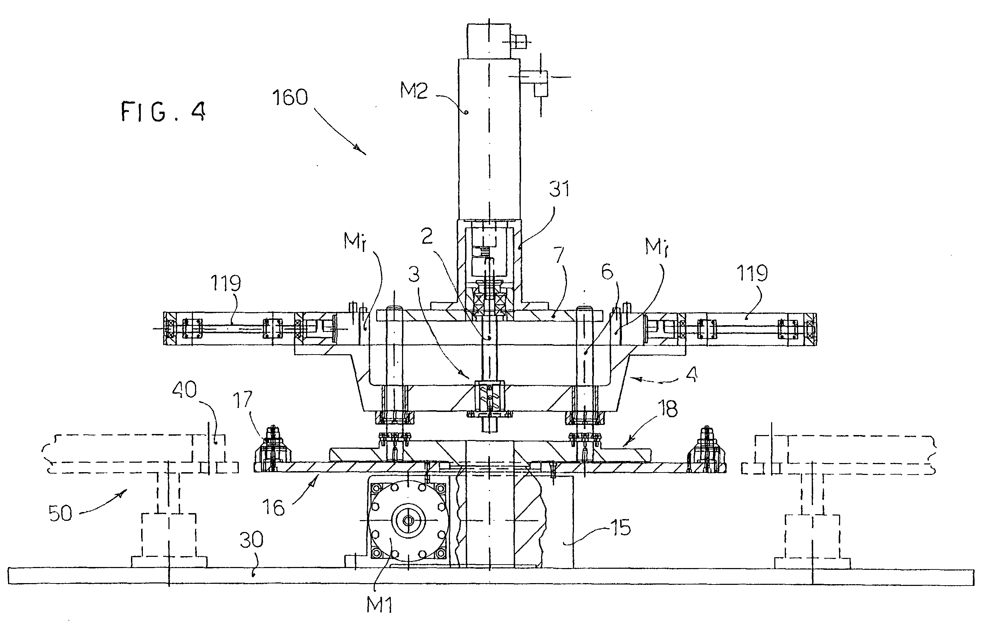

Figure 4 shows a second example of a basic machine (160) for automatic assembly of articles or products, which does not form part of the claimed invention but it is useful for understanding it. The basic machine 160 has essentially the same structure as the basic machine 60 according to the first example. Unlike the first example, in the basic machine 160 the motor M2 for vertical movement of the translating plate 4 is mounted on a bracket 31 disposed above the holding plate 7 fixed to the upper ends of the vertical guide columns 6.

In this case the sleeve 5 which is integral with the translating plate 4 is not provided and the lead nut 3 is integrated axially into the translating plate 4, so that the screw 2 operated by the servomotor M2 engages in the lead nut 3 causing vertical translation of the translating plate 4.

Obviously in this case the crank plate 11 with the relative connecting rods 12 cannot be provided, since the space in the upper part of the machine is occupied by the servomotor M2. Consequently, axes or arms 119 which protrude horizontally outward and carry at their ends the picking members are provided on the translating plate 4. Said horizontal axes 119 are obtained by means of a screw-lead nut coupling. Each axis 119 is controlled in a linear vertical translating movement by an independent servomotor Mi. The motor Mi can, for example, be a linear motor, in which case the screw-lead nut coupling in the axles 119 can be excluded.

In this second example, instead of the servomotor M3 used in the first example to drive the crank plate 11, a plurality of servomotors Mi, each driving the respective horizontal axle 119 are provided. In this manner the horizontal movement of each picking element can be set independently for the single picking up station.

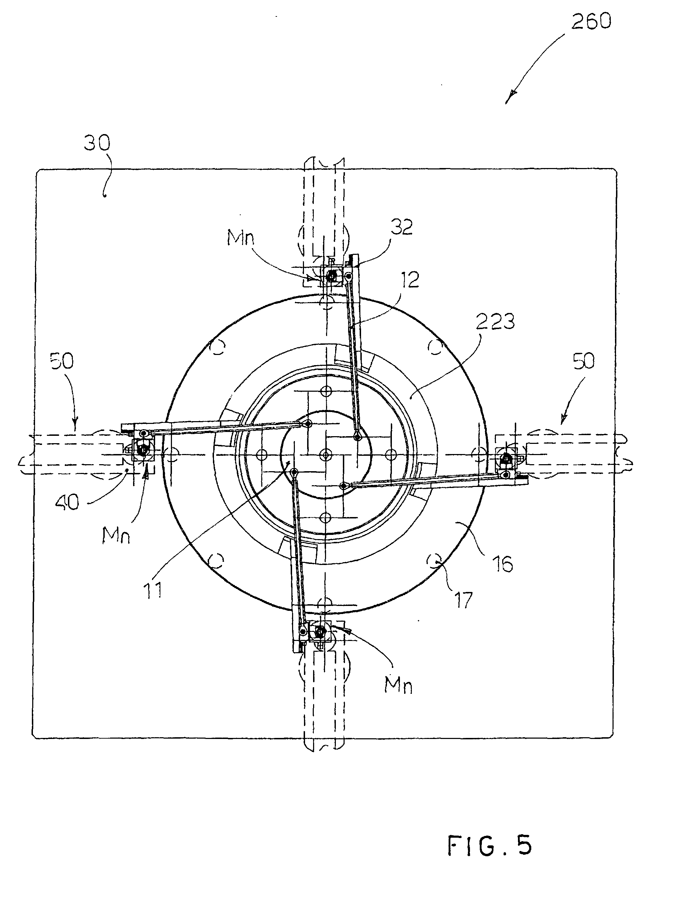

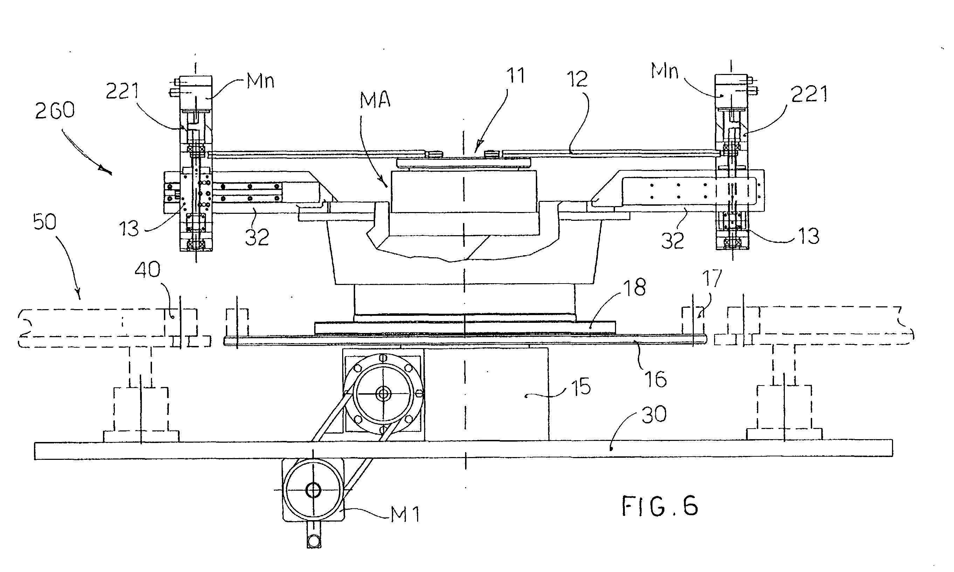

Figures 5 and 6 illustrate a basic machine 260 according to a third embodiment of the invention. In this case the translating plate 4 with the relative servomotor M2 for vertical movement of the translating plate 4 is eliminated. In place of the translating plate 4, mounted on the fixed plate 18 integral with the fixed frame of the machine is a fixed structure 223 from which guide rails 32, on which respective slides 13 slide horizontally, protrude horizontally outward.

A vertical axis or arm 221 which supports the picking element is mounted integrally on each slide 13. Said vertical axes 221 are obtained by means of a screw-lead nut coupling. Each vertical axis 221 can translate vertically controlled by a respective servomotor Mn mounted directly on each axis 221 and on the respective slide 13. The motor Mn can, for example, be a linear motor in which case the screw-lead nut coupling in the axes 221 can be excluded. In this case, therefore, the vertical movement of each picking element can be set independently for the single picking up station.

The slides 13 are connected to respective connecting rods 12 operated by a crank plate 11. In this case, the motor M3 and the relative reduction unit 10 connected to the crank plate 11, described in the first example, can be replaced by a torque motor M_{A} mounted on the fixed structure 223 and acting directly on the crank plate 11.

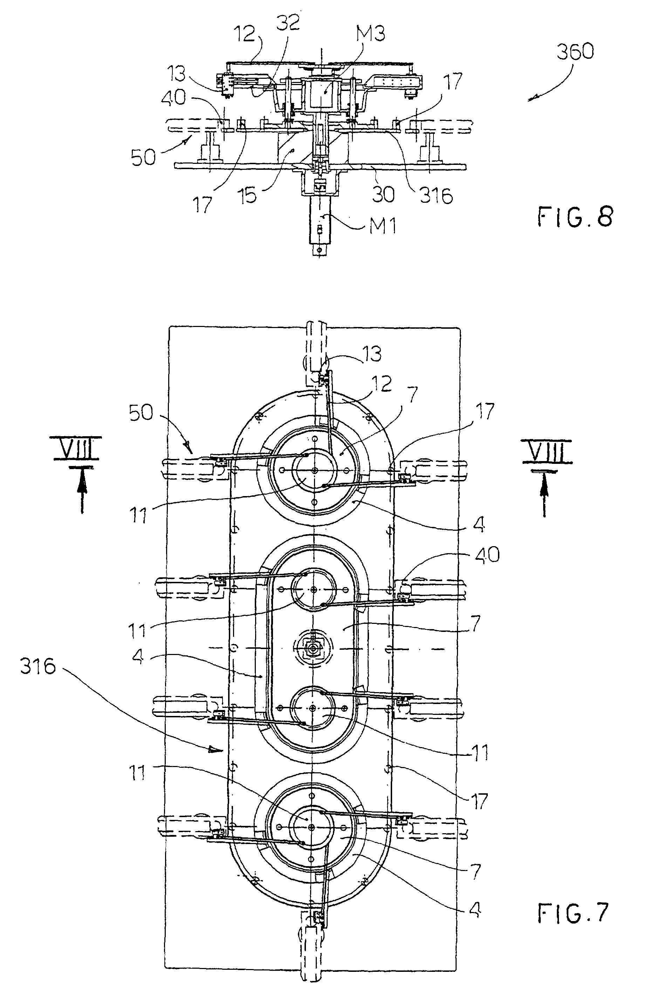

Figures 7 and 8 show a fourth example of a basic machine for automatic assembly of articles or products, which does not form part of the claimed invention but it is useful for understanding it, in which the revolving plate 16 has been replaced by a linear transfer 316. As shown in the sectional view of Figure 8, the picking and placing cycle can be obtained with the same modalities described previously.

Numerous variations and modifications of detail within the reach of a person skilled in the art can be made to the present invention within the scope of the invention as set forth in the appended claims.

## Claims

1. A basic machine (260) for automatic assembly of articles comprising:
- a revolving plate (16) designed to support a plurality of workpiece holders (17), able to receive the components for assembly of the article,
- a plurality of slides (13) able to support picking members for picking up and releasing the single component, said slides (13) imparting the vertical translating movement and the horizontal translating movement to said picking elements, to pass from a picking position in which they pick up the components from terminals (40) of feed systems (50) to a placing position in which they deposit the components on the respective workpiece holders (17) of the revolving plate (16),
**characterized in that**
- at least two independent servomotors are provided to control the vertical translating movement and the horizontal translating movement of the picking elements, respectively, and **in that**
- the horizontal translating movement of the picking members is obtained, by means of a crank plate (11) which, through a plurality of kinetic mechanisms, transmits the horizontal translating movement to said slides (13), wherein
- said crank plate (11) is driven directly by a servomotor (MA), such as a torque motor, without any interposition of a reduction unit.

2. A basic machine (260) according to claim 1, **characterized in that** the vertical translation movement of the picking members is controlled by a plurality of servomotors (Mn), such as linear motors.

3. A basic machine (260) according to claim 2, **characterized in that** each of said servomotors (Mn) drives an axis (221) obtained by a screw-lead nut system.

4. A basic machine (260) according to any one of the preceding claims, **characterized in that** said revolving plate (16) is controlled by a servomotor (M1) which sets in rotation said revolving plate (16) through a revolving table (15) or other interposed device.

5. A basic machine (260) according to any one of the preceding claims, **characterized in that** said rotating plate (16) is driven directly by a servomotor (M1), such as a torque motor, without the interposition of any device.

6. A basic machine (260) according to any one of the preceding claims, **characterized in that** said at least two independent servomotors (Mn; MA) for the vertical translating movement of the picking members and for the horizontal translating movement of the picking members are connected by means of respective drives to an axis control board ( C ) which in turn is connected by means of respective interfaces (I1, I2) to a control panel, by means of which the operator can change the functional parameters of the machine, and to a machine controller, such as a PLC or a PC.

7. A basic machine (260) according to claim 5 and 6, **characterized in that** said servomotor (M1) for the rotating or linear movement of said workpiece holders (17) is connected by means of a drive to said axis control board (C ) which, in turn, is connected, by means of said interfaces (I1, I2) to said control panel, by means of which the operator can change the functional parameters of the machine, and to said machine controller.

8. A basic machine (260) according to any one of the preceding claims, **characterized in that** said kinetic mechanisms comprise connecting rods (12) disposed horizontally with their axis parallel to respective guide rails (32) of the slides (13), one end of each connecting rod (12) being pivoted in the periphery of the crank plate (11) and the other end of each connecting rod (12) being pivoted in the respective slide (13).

## Patentansprüche

1. Eine Basismaschine (260) für die automatische Montage von Artikeln, die folgendes umfasst:
- eine Drehscheibe (16), welche so konstruiert ist, dass sie eine Vielzahl von Werkstückhaltem (17) halten kann, die jeweils Bauteile für die Montage des Artikels aufnehmen können,
- eine Vielzahl von Schlitten (13), die Klaubelemente zum jeweiligen Aufklauben und Loslassen des einzelnen Bauteils halten können, wobei die genannten Schlitten (13) die senkrechte Translationsbewegung und die waagrechte Translationsbewegung auf die genannten Klaubelemente übertragen, um von einer Klaubstellung, in der sie die Bauteile aus Stationen (40) von Speisesystemen (50) klauben, zu einer Ablegestellung überzugehen, in der sie die Bauteile an die entsprechenden Werkstückhalter (17) der Drehscheibe (16) abgeben,
**dadurch gekennzeichnet, dass**
- jeweils mindestens zwei unabhängige Servomotoren zur Steuerung der senkrechten Translationsbewegung und der waagerechten Translationsbewegung der Klaubelemente vorgesehen sind, sowie dadurch, dass
- die waagerechte Translationsbewegung der Klaubelemente durch eine Kurbelscheibe (11) erzielt wird, die mit Hilfe einer Vielzahl kinetischer Mechanismen die waagerechte Translationsbewegung auf die genannten Schlitten (13) überträgt, wobei
- die genannte Kurbelscheibe (11) direkt über einen Servomotor (MA), wie ein Drehmomentmotor, ohne irgendeine Zwischenschaltung eines Untersetzungsgetriebes angetrieben wird.

2. Eine Basismaschine (260) gemäß Anspruch 1, **dadurch gekennzeichnet, dass** die senkrechte Translationsbewegung der Klaubelemente durch eine Vielzahl von Servomotoren (Mn), wie es Linearmotoren sind, gesteuert wird.

3. Eine Basismaschine (260) gemäß Anspruch 2, **dadurch gekennzeichnet, dass** jeder der genannten Servomotoren (Mn) eine Achse (221) antreibt, die durch ein Schrauben-Muttersystem erzielt wird.

4. Eine Basismaschine (260) gemäß einem beliebigen der vorausgegangenen Ansprüche, **dadurch gekennzeichnet, dass** die genannte Drehscheibe (16) durch einen Servomotor (M1) gesteuert wird, der die genannte Drehscheibe (16) jeweils durch einen Drehtisch (15) oder eine andere zwischengeschaltete Vorrichtung in Umdrehung versetzt.

5. Eine Basismaschine (260) gemäß einem beliebigen der vorausgegangenen Ansprüche, **dadurch gekennzeichnet, dass** die genannte Drehscheibe (16) direkt über einen Servomotor (M1), wie es ein Drehmomentmotor ist, ohne Zwischenschaltung irgendeiner Vorrichtung angetrieben wird.

6. Eine Basismaschine (260) gemäß einem beliebigen der vorausgegangenen Ansprüche, **dadurch gekennzeichnet, dass** die mindestens zwei genannten unabhängigen Servomotoren (Mn, MA) jeweils für die senkrechte Translationsbewegung der Klaubelemente und die waagerechte Translationsbewegung der Klaubelemente über entsprechende Antriebe mit einem Achsensteuerpult (C) verbunden sind, das seinerseits über die entsprechenden Schnittstellen (11, 12) mit einer Schalttafel verbunden ist, mit Hilfe derer der Anlagenbediener die Funktionsparameter der Maschine ändern kann, sowie mit einer Maschinensteuerung wie einem PLC oder PC.

7. Eine Basismaschine (260) gemäß den Ansprüchen 5 oder 6, **dadurch gekennzeichnet, dass** der genannte Servomotor (M1) für die Drehung oder lineare Bewegung der genannten Werkstückhalter (17) mit Hilfe eines Antriebs mit dem Achsensteuerpult C) verbunden ist, das seinerseits über die genannten Schnittstellen (11, 12) mit der genannten Schalttafel verbunden ist, mit Hilfe derer der Anlagenbediener die Funktionsparameter der Maschine ändern kann, sowie mit der genannten Maschinensteuerung.

8. Eine Basismaschine (260) gemäß einem beliebigen der vorausgegangenen Ansprüche, **dadurch gekennzeichnet, dass** die genannten kinetischen Mechanismen Verbindungsstangen (12) umfassen, die waagerecht und mit ihrer Achse parallel zu entsprechenden Führungsschienen (32) der Schlitten (13) angeordnet sind, wobei jeweils ein Ende jeder Verbindungsstange (12) am Rand der Kurbelplatte (11) angelenkt ist, und das andere Ende jeder Verbindungsstange (12) jeweils am entsprechenden Schlitten (13) angelenkt ist.

## Revendications

1. Machine de base (260) pour le montage automatique de pièces comprenant :
- une plaque tournante (16) conçue pour soutenir une pluralité d'unités porte-pièces (17), en mesure d'accueillir les composants pour le montage de la pièce,
- une pluralité de chariots (13) en mesure de soutenir des éléments de prise pour le prélèvement et la délivrance de chaque composant, lesdits chariots (13) conférant le mouvement de translation verticale et le mouvement de translation horizontale aux dits éléments de prise, pour passer de la position de prélèvement où ils prélèvent les composants des terminaux (40) des systèmes d'alimentation (50) à une position de pose où ils déposent les composants sur les unités porte-pièces respectives (17) de la plaque tournante (16),
**caractérisée en ce que**
- au moins deux servomoteurs indépendants sont pourvus pour commander le mouvement de translation verticale et le mouvement de translation horizontale des éléments de prise, respectivement, et **en ce que**
- le mouvement de translation horizontale des éléments de prise est obtenu au moyen d'une plaque à manivelle (11) qui, au moyen d'une pluralité de mécanismes cinétiques, transmet le mouvement de translation horizontale aux dits chariots (13), où
- ladite plaque à manivelle (11) est directement commandée par un servomoteur (MA), tel qu'un moteur en anneau (Torque Motor), sans interposition d'une unité de réduction.

2. Machine de base (260) selon la revendication 1, **caractérisée en ce que** le mouvement de translation verticale des éléments de prise est commandé par une pluralité de servomoteurs (Mn), tels que des moteurs linéaires.

3. Machine de base (260) selon la revendication 2, **caractérisée en ce que** chacun desdits servomoteurs (Mn) commande un axe (221) obtenu par un système écrou-vis.

4. Machine de base (260) selon une revendication quelconque parmi les revendications susmentionnées, **caractérisée en ce que** ladite plaque tournante (16) est commandée par un servomoteur (M1) qui porte ladite plaque tournante en rotation (16) au moyen d'une table tournante (15) ou d'un autre dispositif interposé.

5. Machine de base (260) selon une revendication quelconque parmi les revendications susmentionnées, **caractérisée en ce que** ladite plaque tournante (16) est directement commandée par un servomoteur (M1), tel qu'un moteur en anneau (Torque Motor), sans interposition d'un dispositif quelconque.

6. Machine de base (260) selon une revendication quelconque parmi les revendications susmentionnées, **caractérisée en ce que** lesdits au moins deux servomoteurs indépendants (Mn; MA) pour le mouvement de translation verticale des éléments de prise et pour le mouvement de translation horizontale des éléments de prise sont reliés au moyen de commandes respectives vers le tableau de commande de l'axe (C) qui à son tour est relié au moyen d'interfaces respectives (I1, 12) au panneau de commande, au moyen duquel l'opérateur peut modifier les paramètres opérationnels de la machine, et à une commande de la machine, tel qu'un PLC ou un PC.

7. Machine de base (260) selon les revendications 5 et 6, **caractérisée en ce que** ledit servomoteur (M1) pour le mouvement rotatif ou linéaire desdites unités porte-pièces (17) est relié au moyen d'une commande audit tableau de commande de l'axe (C) qui, à son tour, est relié au moyen desdites interfaces (I1, 12) audit panneau de commande, au moyen duquel l'opérateur peut modifier les paramètres opérationnels de la machine, et à ladite commande de la machine.

8. Machine de base (260) selon une revendication quelconque parmi les revendications susmentionnées, **caractérisée en ce que** lesdits mécanismes cinétiques comprennent des tiges de connexion (12) placées horizontalement avec leur axe parallèle aux rails de guidage respectifs (32) des chariots (13), une extrémité de chaque tige de connexion (12) étant pivotée dans la périphérie de la plaque à manivelle (11) et l'autre extrémité de chaque tige de connexion (12) étant pivotée dans le chariot respectif (13).
